# EUROPEAN PATENT APPLICATION

(11) **EP 2 746 966 A1**
(43) Date of publication of application: **25.06.2014**
(21) Application number: 13020118.9
(22) Date of filing: 18.10.2013
(51) Int. Cl.: G06F 17/30

(54) **File information processing method and portable device**

(30) Priority: 19.12.2012 US 201213719242
(71) Applicant: HTC Corporation, Taoyuan County 330 (TW)
(72) Inventor: Lee, Po-Yen, 330 Taoyuan City (TW); Chen, Chien-Wen, 330 Taoyuan City (TW); Yeh, Pai-Chang, 330 Taoyuan City (TW); Lian, Li-Wen, 330 Taoyuan City (TW)
(74) Representative: Carstens, Dirk Wilhelm

(57) **Abstract**

A file information processing method for a portable device is provided. The method comprises receiving at least a file data from an information providing platform by the portable device. A personal terminal device corresponds to the portable device in the information providing platform and the information providing platform provides several information items which correspond to files respectively. The information providing platform receives at least a selecting signal for selecting at least one of the information items and transmits a file data of the file corresponding to the selected information items to the portable device. The portable device provides a file list listing file items corresponding to the received file data respectively.

## Description

### BACKGROUND OF THE INVENTION

### Field of the Invention

The invention relates to an operating method and system of a portable device. Particularly, the invention relates to a file information processing method and system of a portable device.

### Description of Related Art

To cope with modern busy lifestyle, various portable electronic devices with less space occupation are continually developed. Taking a handheld communication device such as a personal digital assistant (PDA) mobile phone or a smart phone as an example, besides a main screen page thereon displays various functions of a conventional communication device, it also includes a plurality of control pages listing a plurality of widgets, where these widgets are respectively system inbuilt programs or files or third-party files purchased and download by a user, for example, game software, video software or e-books, etc., which allows the user to write documents, send and receive emails, browse websites, or use instant messaging software by clicking these interface controllers. Namely, such handheld communication device is not only used for making phone calls, but is also used to provide diversified functions as that does of a small personal computer. With development of wireless network technology, utilization of these functions is no longer limited by space and time, which is convenient for those modern people constantly pursuing efficiency.

However, when the user wants to download a free file or a billing file from a sales platform to a handheld electronic device, the handheld electronic device has to be maintained in a connecting state with a web server providing the sales platform, and the user can persistently browse file items provided by the sales platform through the handheld electronic device and inspect related information of the file items to be downloaded. However, persistent connection of the sales platform to inspect the file items not only occupies network bandwidth resources, but connection quality is probably influenced by a low signal receiving effect due to user's location to cause information transmission delay, which may lead to inconvenience in utilization.

Moreover, the method of transmitting messages or emails to the handheld electronic device of the user to achieve sales promotion may cause that the user's handheld electronic device receives a large amount of unnecessary advertising messages, so that the user is incessantly bothered by all kinds of advertisings.

### SUMMARY OF THE INVENTION

The invention is directed to a file information processing method, which is capable of improving user's initiative of advertising information reception.

The invention provides a portable device, by which a user is capable of selecting information items at a personal terminal device in advance, and transmitting related files of the selected information items to a portable device, and browsing related text narrations and user/consumer comments of files to be installed through the portable device.

The invention provides a file information processing method for a portable device. In the method, at least a file data from an information providing platform is received by the portable device, wherein a personal terminal device through an internet and the portable device login the information providing platform at the same time. The personal terminal device corresponds to the portable device in the information providing platform and the information providing platform provides a plurality of information items. Each of the information items corresponds to a file and the file data of the file. The information providing platform receives at least a selecting signal transmitted from the personal terminal device and the information providing platform, according to the selecting signal, selects at least one of the information items and transmits the file data of each of the selected information items to the portable device. Each file data at least comprises a download address of the corresponding file corresponding to the selected information item. Further, in the method, a file list is provided by the portable device, wherein the file list lists a plurality of file items respectively corresponding to the file data according to the file data received by the portable device.

In an embodiment of the invention, each of the file data further comprises an item name and a text narration of the selected information item.

In an embodiment of the invention, the text narration of each of the file data comprises a file description and at least a user comment of the file corresponding to the selected information item.

In an embodiment of the invention, the file information processing method further comprises steps of receiving an inspection signal by the file list to inspect one of the file items, displaying the text narration of the file data corresponding to the selected file item according to the inspection signal and receiving an installation signal, wherein the installation signal comprises selecting to install one of the file items.

In an embodiment of the invention, after the step of receiving the installation signal, the file information processing method further comprises automatically downloading the file corresponding to the selected file item by the portable device from the download address stated in the corresponding file data corresponding to the selected file item according to the installation signal, and installing the downloaded file on the portable device.

In an embodiment of the invention, each of the files includes a text file, a video/audio file or an application program.

The invention provides a portable device including a receiving module and a file list. The receiving module receives at least a file data from an information providing platform, wherein a personal terminal device through an internet and the portable device login the information providing platform at the same time and the personal terminal device corresponds to the portable device in the information providing platform. The information providing platform provides a plurality of information items and each of the information items corresponds to a file and the file data of the file. The information providing platform receives at least a selecting signal transmitted from the personal terminal device and the information providing platform, according to the selecting signal, selects at least one of the information items and transmits the file data of each of the selected information items to the portable device. Each of the file data at least comprises a download address of the corresponding file corresponding to the selected information item. The file list lists a plurality of file items respectively corresponding to the file data according to the file data received by the portable device.

In an embodiment of the invention, the file data further comprises an item name and a text narration of the selected information item.

In an embodiment of the invention, the text narration of each of the file data comprises a file description and at least a user comment of the file corresponding to the selected information item.

In an embodiment of the invention, the file list further comprises an inspection signal receiving module and a display module. The inspection signal receiving module receives an inspection signal for inspecting one of the file items. The display module displays the text narration of the file data corresponding to the selected file item according to the inspection signal.

In an embodiment of the invention, the portable device further comprises an installation signal receiving module and an installation module. The installation signal receiving module receives an installation signal, wherein the installation signal comprises selecting to install one of the file items. The installation module automatically downloads the file from the download address stated in the corresponding file data corresponding to the selected file item according to the installation signal, and installs the downloaded file on the portable device.

In an embodiment of the invention, each of the files comprises a text file, a video/audio file or an application program.

According to the above descriptions, by logging in the information providing platform through the personal terminal device, the user can initiatively browse various files provided by the information providing platform. After the user selects the information item through the personal terminal device to generate the selecting signal, the portable device corresponding to the login information can receive the file information pre-selected by the user. After the user browses the file information on the portable device and determines to install the file corresponding to the received file information, the portable device can automatically download the file to be installed for installation. In this way, operation steps for selecting and downloading files are simplified.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram illustrating a file system according to an embodiment of the invention.

FIG. 2 is a schematic diagram of an information providing platform according to an embodiment of the invention.

FIG. 3 is a schematic diagram of a file list according to an embodiment of the invention.

FIG. 4 is a schematic diagram illustrating a structure of a file list according to an embodiment of the invention.

FIG. 5 is a schematic diagram of a file item inspection frame according to an embodiment of the invention.

FIG. 6A is a flowchart illustrating a file information processing method according to an embodiment of the invention.

FIG. 6B is a flowchart illustrating a file installation of a file information processing method according to an embodiment of the invention.

### DETAILED DESCRIPTION OF DISCLOSED EMBODIMENTS

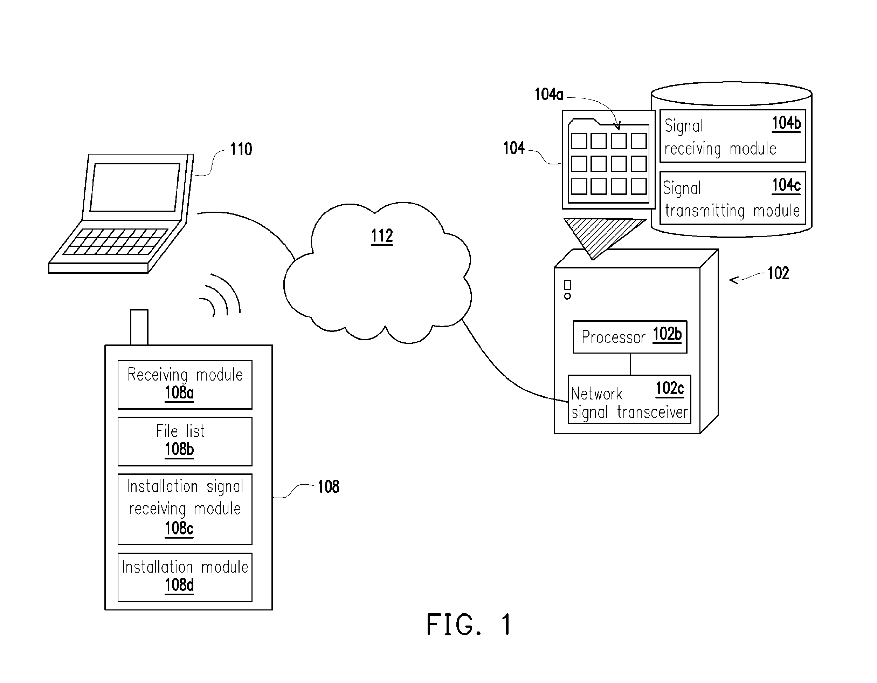

FIG. 1 is a schematic diagram illustrating a file system according to an embodiment of the invention. Referring to FIG. 1, the file system of the present embodiment includes an information providing platform 104 installed in a computer 102 and a file processing system 108 installed in a portable device 106.

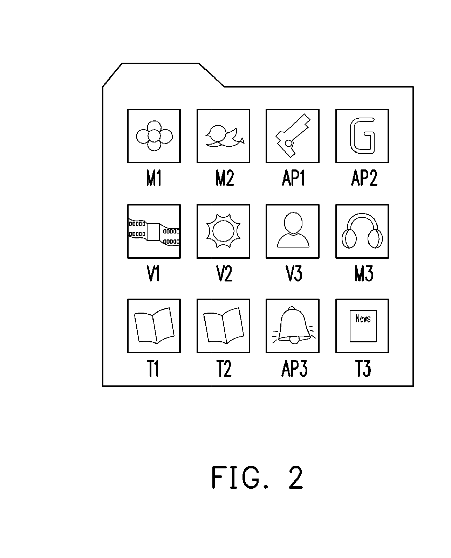

The computer 102 is, for example, a web server. The computer 102 has a computer read/write storage medium 102a for storing a computer readable program. Moreover, the computer 102 further includes a processor 102b and a web signal transceiver 102c. The processor 102b executes a plurality of instructions of the computer readable program to provide the function of the information providing platform 104, and the web signal transceiver 102c transceives a signal through the Internet. In detail, the information providing platform 104 can be implemented by executing a computer readable program. The computer readable program can be stored in the computer read/write storage medium 102a, and the processor 102b executes the instructions of the computer readable program to implement the information providing platform 104 and an operating method thereof. Moreover, the information providing platform 104 includes an information list 104a, a signal receiving module 104b and a signal transmitting module 104c. The information list 104a (shown in FIG. 2) provides a plurality of information items. In an embodiment of the invention, each of the information items corresponding to a file, and each file includes a text file, a video/audio file or an application program. To be specific, in another embodiment, the information providing platform 104 is, for example, an advertising platform, which provides a plurality of billing or free file information, and the file information provided by the advertising platform is periodically or aperiodically updated. The user can connect the advertising platform to obtain information of the latest or most popular files (for example, game programs, e-books, newsflashes, music files or video files, etc.).

FIG. 2 is a schematic diagram of an information providing platform according to an embodiment of the invention. Referring to FIG. 2, the information list 104a only displays 12 information items (including music file items M1-M3, application program items AP1-AP3, video/audio file items V1-V3 and text file items T1-T3) in one frame, and each item is represented by a snapshot or a thumbnail image. However, the invention is not limited thereto, and according to a frame setting of the information list 104a, the same frame may display a different number of the information items, and besides that a snapshot or a thumbnail image is used to represent each item, an information title, a file name or a purchase cost can be marked besides the snapshot or the thumbnail image.

As shown in FIG. 1, when the user uses a personal terminal device 110 (for example, a personal computer or a notebook computer) to log in the information providing platform 104 provided by executing the readable program by the processor 102b of the computer 102, the user can browse the frame of the information list 104a on the personal terminal device 110. When the user wants to log in the information providing platform 104, the user may transmit a login signal from the personal terminal device 110 to the web signal transceiver 102c of the computer 102, and after the information providing platform 104 confirms login information of the login signal, the information providing platform 104 transmits the frame of the information list 104a to the personal terminal device 110 through a digital signal that can be interpreted by a browser of the personal terminal device 110, and then the personal terminal device 110 interprets the digital signal through the browser, and opens the frame of the information list 104a.

When the user browses the frame of the information list 104a on the personal terminal device 110, the user can operate the personal terminal device to generate an interaction event signal (for example, a cursor selecting signal), and select the information item displayed on the frame of the information list 104a. As the personal terminal device 110 is connected to the computer 102 through the Internet 112, at least a selecting signal can be transmitted to the information providing platform 104 to select at least one of the information items. After the web signal transceiver 102c of the computer 102 and the signal receiving module 104b of the information providing platform 104 receive the selecting signal, the information providing platform 104 transmits file data of each of the selected information items to the portable device 106 corresponding to the login information that the user logs in the information providing platform 104 through the signal transmitting module 104c of the information providing platform 104 and the web signal transceiver 102c according to the selecting signal. To be specific, according to the login information corresponding to the login signal, the information providing platform 104 can transmit the file data of each of the selected information items to the portable device 106 corresponding to the login information. In another embodiment, the personal terminal device 110 and the portable device 106 simultaneously log in the information providing platform 104, and in the information providing platform 104, login information of logging the information providing platform 104 through the personal terminal device 110 corresponds to the portable device 106. Moreover, the file data includes at least a download address of the file corresponding to the selected information item. In another embodiment, each file data further includes an item name and a text narration of the selected information item. In other embodiments, the text narration includes a file description and at least a user comment of the file corresponding to the selected information item.

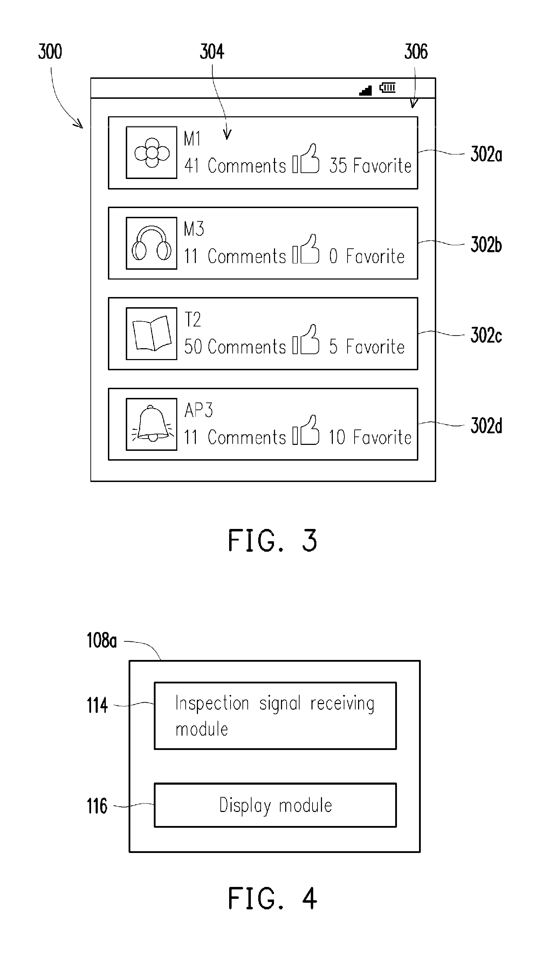

The file processing system 108 installed in the portable device 106 and executed on the portable device 106 includes a receiving module 108a, a file list 108b, an installation signal receiving module 108c and an installation module 108d. The file list 108b of the file processing system 108 lists a plurality of file items respectively corresponding to the file data received by the receiving module 108a. FIG. 3 is a schematic diagram of a file list according to an embodiment of the invention. Referring to FIG. 3, for example, after the user selects the music file items M1 and M3, the text file item T2 and the application program file item AP3 through the personal terminal device 110, the information providing platform 104 transmits the file data of the selected information items to the portable device 106, and after the portable device 106 receives the file data corresponding to the above information items, a file list 300 thereof lists file items 302a, 302b, 302c and 302d respectively corresponding to the music file items M1 and M3, the text file item T2 and the application program file item AP3 selected by the user. It should be noticed that in the present embodiment, besides that the snapshots or thumbnail images representing the information items in the information list are used to respectively represent the file items 302a, 302b, 302c and 302d, each of the file items 302a, 302b, 302c and 302d lists a user comment including a user comment number 304 and a user recommendation number 306 of each of the file items 302a, 302b, 302c and 302d according to the file data received by the portable device 106.

Then, the installation signal receiving module 108c of the file processing system 108 of the portable device 106 receives an installation signal, where the installation signal includes selecting to install one of the file items listed in the file list. The installation module 108d automatically downloads the file from the download address stated in the file data corresponding to the selected file item according to the installation signal, and installs the downloaded file on the portable device 110.

FIG. 4 is a schematic diagram illustrating a structure of a file list according to an embodiment of the invention. Referring to FIG. 4, in another embodiment, the file list 108b further includes an inspection signal receiving module 114 and a display module 116. Before the installation signal receiving module 108c of the file processing system 108 of the portable device 106 receives the installation signal, the inspection signal receiving module 114 of the file list 108b receives an inspection signal to inspect one of the file items listed by the file list. The display module 116 displays the text narration of the file data corresponding to the selected file item according to the inspection signal.

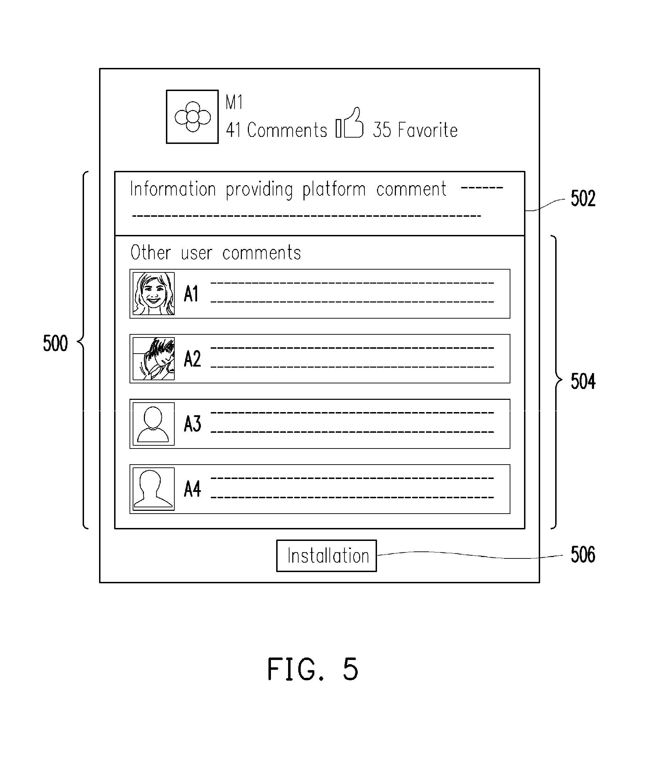

FIG. 5 is a schematic diagram of a file item inspection frame according to an embodiment of the invention. Referring to FIG. 5, in the present embodiment, the user operates the file list 108b to generate an inspection signal to, for example, inspect the file item 302a, and the display module 116 accordingly displays a text narration 500 of the file data corresponding to the file item 302a, where the text narration 500 may include a comment (or a file description) 502 provided by the information providing platform 104 and other user comments 504. In the present embodiment, only the comment 502 provided by the information providing platform 104 is provided, though the invention is not limited thereto, and the text narration 500 may also include comments of such file item that are provided by various platforms. Moreover, in other embodiments, the other user comments 504 can also be customized to comments of such file item that are only provided by friends of the user according to preference of the user of the portable device 106 or the user logging in the information providing platform 104. Moreover, in the embodiment of FIG. 5, in the same frame that displays the text narration 500, a pattern interface 506 is further displayed, and the user can directly click the pattern interface 506 to generate the installation signal to install the inspected file item.

The file processing system 108 (including the file list 108b, the installation signal receiving module 108c and the installation module 108d, and the inspection signal receiving module 114 and the display module 116 included in the file list 108b) of the portable device 106 can be implemented by executing a computer readable program. The computer readable program can be stored in the computer read/write storage medium, and a processor of the portable device 106 can execute instructions of the computer readable program to implement the aforementioned functions.

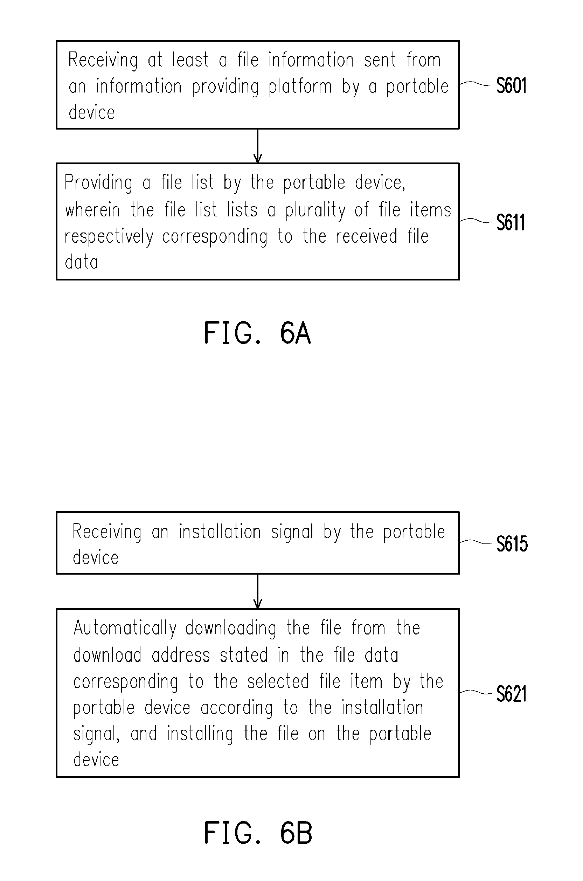

FIG. 6A is a flowchart illustrating a file information processing method according to an embodiment of the invention. Referring to FIG. 6A, in step S601, at least a file data sent from an information providing platform is received by the portable device. That is, the information providing platform (for example, the information providing platform 104 of FIG. 1) is executed on a computer (for example, the computer 102 of FIG. 1), and the information providing platform includes an information list (for example, the information list 104a of FIG. 1), which provides a plurality of information items and each of the information items corresponds to a file. The information providing platform receives a selecting signal includes selecting at least one of the information items. It should be noticed that a personal terminal device (for example, the personal terminal device 110 of FIG. 1) is connected to the computer through the Internet (for example, the Internet 112 of FIG. 1) to transmit the selecting signal to the information list of the information providing platform. The information providing platform sends file data of each of the selected information items to a portable device (for example, the portable device 106 of FIG. 1) according to the selecting signal. To be specific, according to the login information corresponding to the login signal generated when the user logs in the information providing platform, the information providing platform can transmit operating instructions to the portable device corresponding to the login information. Moreover, the file data comprises at least a download address of the file corresponding to the selected information item. In addition, the file data further includes an item name and a text narration of the selected information item. The text narration of the file data includes a file description and at least a user comment of the file corresponding to the selected information item.

In step S611, the portable device provides a file list listing a plurality of file items respectively corresponding to the received file data.

In one embodiment, the file information processing method of the present invention further comprises the file installation steps shown in FIG. 6B. FIG. 6B is a flowchart illustrating a file installation of a file information processing method according to an embodiment of the invention. As shown in FIG. 6B, in step S615, an installation signal is received by the portable device, where the installation signal includes selecting to install one of the file items. Then, in step S621, according to the installation signal, the portable device automatically downloads the file from the download address stated in the file data corresponding to the selected file item, and the downloaded file is installed on the portable device.

In the aforementioned embodiment related to the file system, definitions of the information providing platform and the components therein have been described in detail, so that description of the information providing platform is not repeated in the present embodiment. Moreover, in the aforementioned embodiment, definitions of the file processing system 108 of the portable device and the components therein and the operating method thereof have been described in detail, so that description thereof is not repeated.

In the present invention, the user can log in the information providing platform through the personal terminal device, and selects the information item corresponding to the interested file in the information list of the information providing platform. Namely, a system practitioner provides the information providing platform to serve as an advertising bulletin board or an advertising medium, and each information item is an advertising of the corresponding file, so that before downloading the file from the systems provided by different practitioners, the user can first transmit the text narration (including the file description, the comments provided by the system platform and other user's comments) related to the interested information item to the portable device of the user through the information providing platform, so that user's initiative of advertising information reception is greatly improved. Then, after the user browses the filtered information through the local device (the portable device), the user determines whether or not to connect a system of a file provider to download and pay the file. In this way, when the user wants to purchase a file or download and install a free file, it is unnecessary to keep connecting a so-called online sales platform to occupy the network bandwidth resources. Moreover, after the user browses the file items through the portable device, the user can operate the portable device to generate the installation signal, and the portable device can automatically download the file selected by the user from the download address stated in the file data corresponding to the selected file item, and the downloaded file is installed on the portable device, so as to improve utilization convenience.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A file information processing method for a portable device, comprising:
receiving at least a file data from an information providing platform by the portable device, wherein a personal terminal device through an internet and the portable device login the information providing platform at the same time, the personal terminal device corresponds to the portable device in the information providing platform, the information providing platform provides a plurality of information items, each of the information items corresponds to a file and the file data of the file, the information providing platform receives at least a selecting signal transmitted from the personal terminal device, the information providing platform, according to the selecting signal, selects at least one of the information items and transmits the file data of each of the selected information items to the portable device and each file data at least comprises a download address of the corresponding file corresponding to the selected information item; and
providing a file list by the portable device, wherein the file list lists a plurality of file items respectively corresponding to the file data according to the file data received by the portable device.

2. The file information processing method as claimed in claim 1, wherein each of the file data further comprises an item name and a text narration of the selected information item.

3. The file information processing method as claimed in claim 2, wherein the text narration of each of the file data comprises a file description and at least a user comment of the file corresponding to the selected information item.

4. The file information processing method as claimed in claim 1, further comprising:
receiving an inspection signal by the file list to inspect one of the file items;
displaying the text narration of the file data corresponding to the selected file item according to the inspection signal; and
receiving an installation signal, wherein the installation signal comprises selecting to install one of the file items.

5. The file information processing method as claimed in claim 4, after the step of receiving the installation signal, further comprising:
automatically downloading the file corresponding to the selected file item by the portable device from the download address stated in the corresponding file data corresponding to the selected file item according to the installation signal, and installing the downloaded file on the portable device.

6. The file information processing method as claimed in claim 1, wherein each of the files includes a text file, a video/audio file or an application program.

7. A portable device, comprising:
a receiving module, receiving at least a file data from an information providing platform, wherein a personal terminal device through an internet and the portable device login the information providing platform at the same time, the personal terminal device corresponds to the portable device in the information providing platform, the information providing platform provides a plurality of information items, each of the information items corresponds to a file and the file data of the file, the information providing platform receives at least a selecting signal transmitted from the personal terminal device, the information providing platform, according to the selecting signal, selects at least one of the information items and transmits the file data of each of the selected information items to the portable device and each file data at least comprises a download address of the corresponding file corresponding to the selected information item; and
a file list, wherein the file list lists a plurality of file items respectively corresponding to the file data according to the file data received by the portable device.

8. The portable device as claimed in claim 7, wherein the file data further comprises an item name and a text narration of the selected information item.

9. The portable device as claimed in claim 8, wherein the text narration of each of the file data comprises a file description and at least a user comment of the file corresponding to the selected information item.

10. The portable device as claimed in claim 7, wherein the file list further comprises:
an inspection signal receiving module, receiving an inspection signal for inspecting one of the file items; and
a display module, displaying the text narration of the file data corresponding to the selected file item according to the inspection signal.

11. The portable device as claimed in claim 7, further comprising:
an installation signal receiving module, receiving an installation signal, wherein the installation signal comprises selecting to install one of the file items; and
an installation module, automatically downloading the file from the download address stated in the corresponding file data corresponding to the selected file item according to the installation signal, and installing the downloaded file on the portable device.

12. The portable device as claimed in claim 7, wherein each of the files comprises a text file, a video/audio file or an application program.
